# EUROPÄISCHE PATENTSCHRIFT

(11) **EP 3 454 963 B1**
(45) Veröffentlichungstag und Bekanntmachung des Hinweises auf die Patenterteilung: **26.02.2020**
(21) Anmeldenummer: 17745278.6
(22) Anmeldetag: 12.07.2017
(51) Int. Cl.: B01D 24/20, B01D 24/46

(54) **RÄUMGERÄT**
CLEARING DEVICE
APPAREIL DE DRAGAGE

(30) Priorität: 15.07.2016 DE 202016004349 U
(43) Veröffentlichungstag der Anmeldung: 20.03.2019
(73) Patentinhaber: LIG GmbH, 42555 Velbert (DE)
(72) Erfinder: DOPPSTADT, Ferdinand, 42555 Velbert (DE)
(74) Vertreter: Von Rohr Patentanwälte Partnerschaft mbB
(86) Internationale Anmeldenummer: PCT/EP2017/067640
(87) Internationale Veröffentlichungsnummer: WO 2018/011318

(56) Entgegenhaltungen:
- EP-A1- 1 920 812
- DE-U1-202008 001 685
- US-A- 584 112

## Beschreibung

Die Erfindung betrifft ein Räumgerät, insbesondere zur Räumung und/oder Wartung von Filterbecken, nach dem Oberbegriff des Anspruchs 1.

Filterbecken, wie zum Beispiel Sandfilter-Klärbecken, erfordern eine regelmäßige Wartung durch Entfernung der sich betriebsbedingt einstellenden Sedimentschicht. Diese Sedimentschicht hat eine Stärke von ca. 1 cm bis 5 cm und soll möglichst präzise, ohne nennenswerte Verluste des Filtersandes entfernt werden. Die Filterbecken besitzen eine Grundfläche von bis zu mehreren 1000 m² und werden regelmäßig maschinell gereinigt. Die hierzu eingesetzten Geräte haben Arbeitsbreiten von 2 bis 3 m, sind meist mit Raupenfahrwerken ausgerüstet und besitzen ein Betriebsgewicht von 5 bis 8 t. Aufgrund der dadurch verursachten Dimensionen der Geräte sind sie allerdings nur beschränkt manövrierfähig. Insbesondere in Bereichen, die eine Feinsteuerung bzw. eine sehr genaue Steuerung der Geräte erfordern, sind diese Geräte nicht einsetzbar, weil die Gefahr besteht, dass bestimmte baulichen Einrichtungen der Filterbecken beschädigt oder zerstört werden. Solche bauliche Einrichtungen sind zum Beispiel Säulen, Wände, Pumpenschächte, Rechenwerke oder anderer bauliche Elemente.

Bei der Durchführung dieser Reinigungsarbeiten sollen die Sedimentschichten möglichst vollständig entfernt werden. Dabei sollen Verluste von Filtersand möglichst vermieden werden. Um Beeinträchtigungen bzw. Beschädigungen durch den Einsatz von Geräten zu vermeiden, wird im Stand der Technik ein Arbeitsstreifen mit einer Breite von ca. einem halben Meter Abstand zu diesen Einrichtungen manuell, d.h. mit Schaufeln oder dergleichen freigeräumt. Diese Tätigkeiten sind natürlich sehr anstrengend und deshalb als körperlich schwere Arbeit zu bezeichnen. Sie sind demzufolge entsprechend einzustufen und entsprechend zeitaufwendig. Damit kommt es zu hohen Stillstandzeiten bei der Nutzung der Filterbecken. Eine qualifizierte maschinelle, technische Unterstützung für diese Handarbeiten ist derzeit nicht bekannt.

Die DE 20 2008 001 685 U1 betrifft ein Räumfahrzeug zum Entfernen von zusammenhängenden Anlagenteppichen bei der Reinigung von Filterbecken zur Trinkwasseraufbereitung mit einer Räumvorrichtung zum Aufnehmen und Abtransportieren einer Oberflächenschicht.

Die US 584 112 A betrifft eine Vorrichtung zum Räumen bzw. Transportieren von Kohle.

Die EP 1 920 812 A1 betrifft eine Vorrichtung zum Entfernen von zusammenhängenden Algenteppichen bei der Reinigung von Filterbecken zur Trinkwasseraufbereitung.

Aufgabe der Erfindung ist es daher, eine Vorrichtung zur Verfügung zu stellen, die wenigstens einen der Nachteile, wie sie zuvor beschrieben wurden, beseitigt. Demzufolge ist es auch Aufgabe der Erfindung, Arbeitskräfte von schwerer körperlicher Arbeit zu entlasten, die Arbeitssicherheit und den Gesundheitsschutz der Arbeitskräfte, die diese Tätigkeiten ausüben, zu verbessern. Des Weiteren soll ein effektives Ergebnis hinsichtlich Qualität der Reinigung und der Bearbeitungszeit erreicht werden, wobei insbesondere Stillstandzeiten der Filterbecken reduziert werden sollen, was zu Kosteneinsparungen führen soll.

Die Aufgabe der Erfindung wird gelöst durch ein Räumgerät, insbesondere zur Räumung und/oder Wartung von Filterbecken, bestehend aus wenigstens einem Träger, wenigstens einem Fahrwerk, wenigstens einer Abtragvorrichtung, wenigstens einer Antriebsvorrichtung und wenigstens einer Schub- bzw. Führungsvorrichtung, wobei die Abtragvorrichtung in Fahrt- bzw. Abtragrichtung vorn bzw. vor dem Fahrwerk bzw. vor einer Achse des Fahrwerks angeordnet ist, die Schub- bzw. Führungsvorrichtung in Fahrt- bzw. Abtragrichtung hinten vorgesehen ist und wobei die Abtragvorrichtung eine Plattform umfasst, auf der ein antreibbares bzw. angetriebenes, flexibles Abtragmittel umläuft, um Material von einem Boden des Filterbeckens abzutragen, abzutransportieren und/oder abzuwerfen.

Erfindungsgemäß ist vorgesehen, dass die Plattform der Abtragvorrichtung von einem Rahmen gebildet ist, an dem wenigstens drei Umlenkrollen eine Umlaufkette bzw. einen Umlaufgurt führen und an der Umlaufkette bzw. dem Umlaufgurt Abtragelemente bzw. Schaber vorgesehen sind, die das Material abtragen und abtransportieren.

Die Plattform kann dabei als offener Rahmen ausgebildet sein. Es ist allerdings genauso gut möglich, als Boden der Plattform eine Platte vorzusehen, die dann in gewissem Abstand von der vorderen Begrenzung der Vorrichtung endet, damit das Material im gewünschten Abstand von der jeweiligen Begrenzung dort abgeworfen werden kann.

Mit einer solchen Vorrichtung gelingt es jetzt auch in den kritischen Bereichen der Filterbecken, d.h. in einem Abstand von ca. 50 cm von diesen Vorrichtungen, die Sedimentschicht als abzutragende Materialschicht maschinell abzutragen. Dabei werden sämtliche Nachteile des Standes der Technik, wie sie eingangs aufgeführt worden, beseitigt. Es wird eine erhebliche Steigerung der Arbeitsproduktivität erreicht bei gleichzeitiger Reduzierung der Unfallgefährdung und insbesondere bei Reduzierung der körperlich sehr schweren Arbeit. Die Stillstandzeiten, die bisher erhebliche Kosten verursachten, können in hohen Maße reduziert werden. Verbunden damit ist gleichzeitig auch eine Verbesserung der Qualität der Abtrag- bzw. Reinigungsarbeiten. Durch die geringen baulichen Abmessungen des Gerätes gelingt es in allen Bereichen, wie sie eingangs erwähnt wurden, die Abtrag- bzw. Reinigungsarbeiten maschinell durchzuführen. Die erfindungsgemäße Lösung besteht demnach aus einer handgeführten, mit einem Motor versehenen Einrichtung, die sehr kompakt gebaut ist. Sie ist so konzipiert, dass sie auch in den kritischen Bereichen der Reinigungsbecken bzw. Sedimentationsbecken einsetzbar ist. Die Vorrichtung kann von einer Arbeitskraft, beispielsweise an 2 Holmen, geführt und so sehr präzise in der Nähe von Begrenzungen, d.h. Wänden und technischen Installationen eingesetzt werden. Dabei wird die Energie sowohl für den Räumvorgang (seitliches Verschieben des Sedimentes) als auch die Vorschubbewegung des Gerätes durch Motorkraft erbracht. Die dadurch entstehenden erheblichen Erleichterungen für die Arbeit der die Tätigkeit ausführenden Arbeitskräfte liegen auf der Hand. Dabei ist es auch ein Vorteil der Erfindung, dass der Einsatz dieses Gerätes natürlich nicht nur auf Filterbecken und das Abräumen von Sedimentablagerungen beschränkt ist. Vielmehr lässt sich die Vorrichtung auch in Bereichen einsetzen, wo bestimmte Bodenschichten in definierter Dicke bzw. Tiefe abgetragen werden sollen. Die Erfindung wird allerdings beispielhaft nur an einem Räumgerät zur Reinigung von Filterbecken beschrieben.

Ein Räumgerät, wie zuvor beschrieben, zeichnet sich entsprechend einer Weiterbildung der Erfindung dadurch aus, dass das Räumgerät als handgeführtes, motorisiertes Räumgerät ausgebildet ist und eine Arbeitsbreite von 40 cm bis zu 120 cm, vorzugsweise von 60 cm bis zu 80 cm aufweist. Die Vorteile, wie sie zuvor beschrieben worden sind, werden natürlich bei dieser Ausführungsform in der gleichen Weise erzielt. Das Gerät ist demzufolge leicht handhabbar, durch eine einzige Arbeitskraft sehr leicht zu führen und zu bedienen und erfordert keine körperlich schwere Arbeit. Das Gerät ist demnach vorteilhafterweise mit wenigstens einer Fahr- und/oder wenigstens einer Trag-Achse ausgerüstet. Das Fahrwerk kann beispielsweise mit Niederdruckreifen mit Pfeilverzahnung ausgerüstet sein, wie sie im Gartenbau oder in der Landwirtschaft eingesetzt werden. Es ist allerdings auch möglich, das Gerät mit einem Raupenfahrwerk zu versehen, beispielsweise einem Delta-Raupenfahrwerk, um den Bodendruck zu verringern und die Traktion zu erhöhen.

Gemäß einer vorteilhaften Weiterbildung ist die Erfindung auch dadurch gekennzeichnet, dass der Rahmen von dem Grundgerät abkoppelbar ausgebildet ist, um das Grundgerät gegebenenfalls auch für andere Arbeiten einsetzen zu können. Die Universalität der Vorrichtung wird dadurch natürlich in erheblichen Maße verbessert.

Ein besonderer Aspekt des erfindungsgemäßen Räumgeräts ist dadurch angegeben, dass eine der Umlenkrollen verschwenkbar ausgebildet ist, vorzugsweise in einem Bereich bis zu 35 Grad, um die Abwurfbreite für das abgetragene Material zu verändern und um insbesondere dafür zur sorgen, dass der vom abgetragenen Material erzeugte Wall weiter auf die unbearbeitete Fläche geschoben wird bzw. zu verhindern, dass das Material nicht auf die bearbeitete Fläche zurückfällt. Damit wird natürlich die Qualität der Abtragarbeit in erheblichen Maße erhöht, weil nun auch die Randbereiche maschinell sehr sauber und mit einer definierten Einstelltiefe gereinigt werden können. Der Verlust an Filtersand wird verringert. Natürlich treten auch die eingangs beschriebenen Vorteile bei der jetzt beschriebenen Weiterbildung der Erfindung auf. Vorteilhafterweise ist die Umlenkrolle verschwenkbar, die sich am nächsten am Gehäuse befindet bzw. die am weitesten vom vorderen Rand der Vorrichtung entfernt ist.

Eine Variante des erfindungsgemäßen Räumgeräts zeichnet sich dadurch aus, dass die Abtragvorrichtung sowohl um eine horizontale Achse quer zur Arbeitsrichtung verschwenkbar, als auch parallel verschwenkbar und höhenverstellbar an dem Träger bzw. Gehäuse angeordnet ist, um den Arbeitsbereich der Abtragvorrichtung zum Boden hin anzupassen bzw. einzustellen. Demzufolge ist auch dieses kleine handgeführte Gerät sehr universell ausgestattet. So lässt sich die Arbeitshöhe der Abtragvorrichtung einstellen. Des Weiteren ist es dadurch möglich, den Anstellwinkel bezüglich der Horizontalachse und Längsachse des Geräts zu verändern. Damit wird natürlich ein erheblich besseres Ergebnis bezüglich der Abtragleistung und Abtragqualität erreicht. Je nach Beschaffenheit der abzutragenden Sedimentschicht lässt sich demzufolge die Vorrichtung optimal auf die jeweiligen Bedingungen einstellen. So kann die Bedienperson sowohl auf unterschiedliche Dicken der Schicht, auf unterschiedlichen Feuchtigkeitsgrad bzw. unterschiedliche Konsistenzen der Sedimentschichten, zum Beispiel sehr klebrige Schichten, reagieren und die Vorrichtung optimal zum Abtrag dieser Schicht einsetzen.

Erfindungsgemäß wurde gefunden, dass eine vorteilhafte Weiterbildung des Räumgeräts sich dadurch auszeichnet, dass an der Abtragvorrichtung zumindest an der in Abtragrichtung rechten Seite eine Seitenführung vorgesehen ist, wobei die Seitenführung vorzugsweise als Führungsrolle ausgebildet ist. Damit kann das Gerät auch bei längeren Bearbeitungswegen seitlich sehr exakt geführt werden, indem es beispielsweise an einer Wand oder einer entsprechenden Begrenzung angelegt und dort geführt wird. Nur durch leichtes seitliches Andrücken gelingt dies ohne erheblichen Kraftaufwand durch die Bedienperson der Vorrichtung. Diese Seitenführung, die als Stützrolle ausgeführt sein kann, erleichtert die Arbeit demzufolge für den Geräteführer auch dadurch, da die verfahrensbedingte Seitentrift des Schabersystems bzw. Abtrag-Systems kompensiert wird. Die Seitenführung kann zur Anpassung an verschiedene, örtliche Bedingungen bezüglich der Höhe und Neigung durch Voreinstellung verändert werden. Besonders vorteilhaft ist es natürlich, wenn dies entsprechend einer weiteren Variante der Erfindung auch während der Räumarbeit, zum Beispiel automatisch geschehen kann, ohne die Vorrichtung anzuhalten. Um den Innenradius von Rundbehältern abfahren zu können, ist es nach der Erfindung entsprechend einer Weiterbildung auch möglich, dass die außenseitige Führung in ihrem Schwenkbereich mit zusätzlichen Rastfunktionen ausgerüstet ist. Damit kann auf die unterschiedlichen Radien der Becken durch Wahl einer entsprechenden Raststellung reagiert werden.

Von Vorteil ist es weiterhin, wenn an der Abtragvorrichtung in Arbeitsrichtung vorn wenigstens eine vorzugsweise als Kufe ausgebildete Höhenverstell- bzw. Arbeitstiefeneinstellvorrichtung vorgesehen ist, um die Abtragtiefe einzustellen. Die Kufe gleitet über die vorliegende Sedimentschicht. Dabei wird von dem Gleit-Niveau der Kufen die Schichtdicke (Arbeitshöhe) für die abzutragende Schicht abgeleitet. Der Einstell-Bereich beträgt vorteilhafterweise 0-50 mm. Diese Einstellung ist allerdings nicht einschränkend zu verstehen, da je nach zu lösender Aufgabe auch andere Schichtdicken eingestellt werden können. Die Kufen können auch durch Tasträder gegebenenfalls mit Niederdruckbereifung ersetzt werden. Die Geräte-Einstellung kann sowohl mechanisch durch Bolzen erfolgen als auch in einer technisch erweiterten Version durch eine gegebenenfalls hydraulische oder elektrische Verstellung, ausgelöst durch den Geräteführer, erfolgen. Natürlich ist es auch möglich, das Gerät mit einer selbstregelnden Funktion für diese Einstellmöglichkeit zu versehen.

Ein Räumgerät nach der Erfindung zeichnet sich dadurch aus, dass an den Schabern insbesondere auswechselbare Verschleißelemente angeordnet sind, deren zum Boden weisende Seite eine Abschrägung von vorzugsweise 10 bis 15 Grad aufweisen. Diese Verschleißelemente sind vorteilhafterweise aus einem flexiblen Material gebildet. Durch diese Verschleißelemente wird erreicht, dass die Einsatzzeit des Gesamtgerätes in erheblichen Maße positiv beeinflusst werden kann. Anstelle der Auswechslung des gesamten Schabers ist es bei Verschleiß jetzt möglich, nur die Verschleißelemente auszutauschen. Die Schaber haben zudem an ihrer nach außen gerichteten Vorderseite erfindungsgemäß einen Überstand von 2 bis zu 6 cm, um bei Wandberührungen oder bei der Berührung mit anderen System-Elementen des Filterbeckens keine Beschädigungen zu verursachen. Diese Verschleißelemente können entweder aufvulkanisiert sein. Sie können allerdings auch mittels Schraubverbindungen an einem 2-teilig ausgeführten Schaber befestigt werden.

Das Räumgerät nach der Erfindung besitzt als Antriebsvorrichtung einen Verbrennungsmotor oder einen Elektromotor. Die Erfindung ist hier in keinster Weise eingeschränkt. So kann es durchaus sinnvoll sein, einen Elektromotor als Antriebsvorrichtung vorzusehen, der mittels Schleppkabel mit Elektroenergie versorgt wird. Es ist genauso gut möglich, dass Räumgerät mit einem batteriebetriebenen Elektroantrieb zu versehen. Natürlich ist es auch möglich, als Antriebsvorrichtung einen benzinbetriebenen Ottomotor oder einen Dieselmotor vorzusehen.

Die Erfindung wird nachfolgend anhand eines Ausführungsbeispiels beschrieben.

Es zeigen:

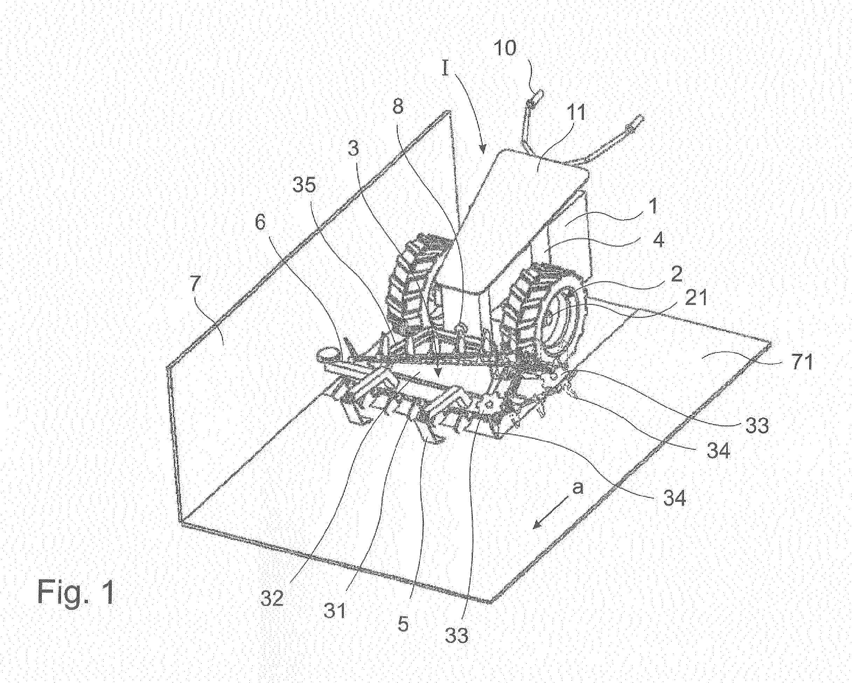

- Fig. 1: ein erfindungsgemäßes Räumgerät in einer dreidimensionalen Darstellung,

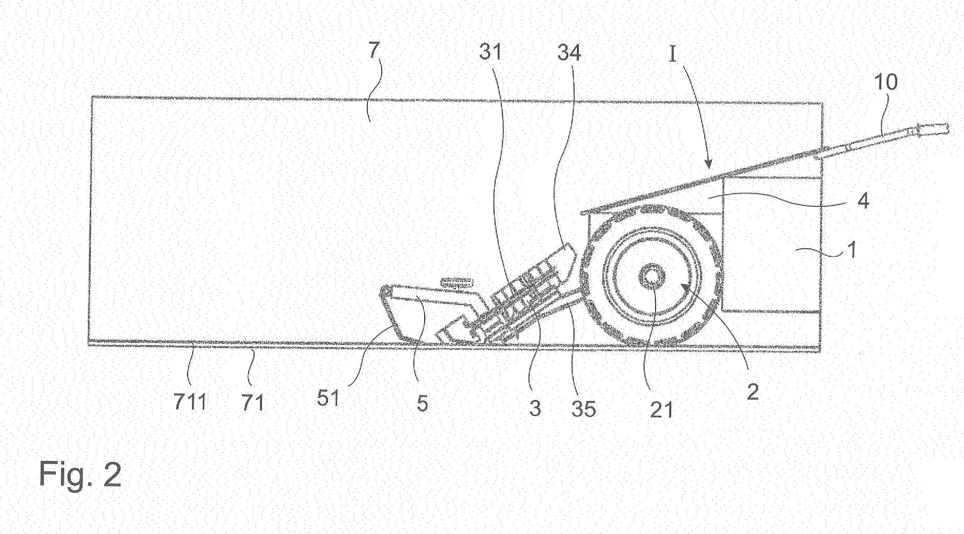

- Fig. 2: das Räumgerät nach Fig. 1 in einer Seitenansicht und

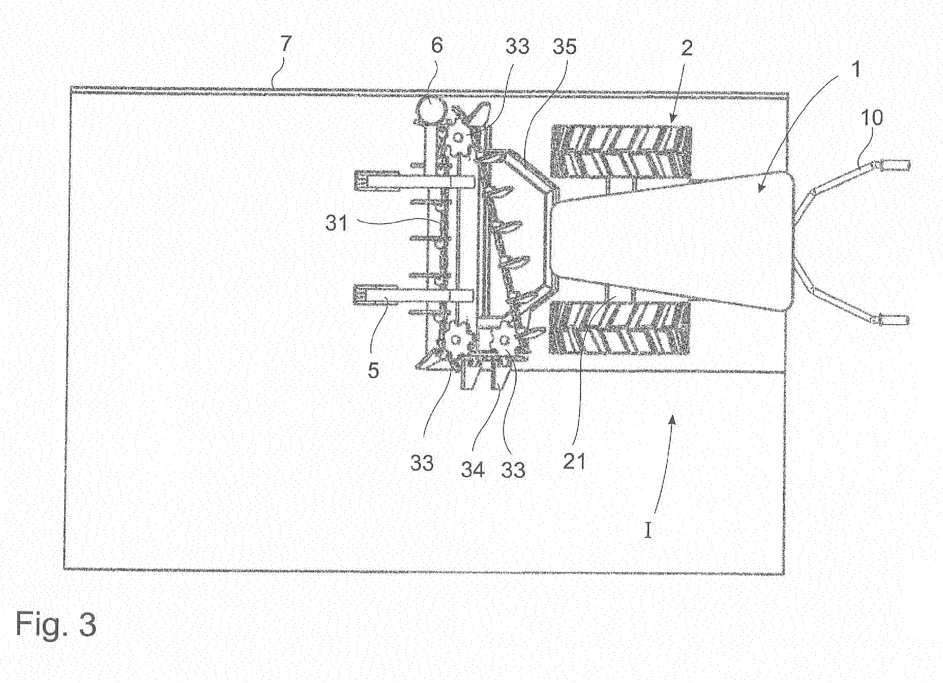

- Fig. 3: das Räumgerät nach den Fig. 1 und 2 in einer Draufsicht.

Alle 3 Figuren werden nachfolgend im Zusammenhang beschrieben. Das heißt, alle Bezugszeichen werden in allen Figuren in gleicher Weise für die gleichen Merkmale verwendet. Schematisch mit einem Pfeil angedeutet ist das erfindungsgemäße Räumgerät mit dem Bezugszeichen I bezeichnet. Zentral ist die Vorrichtung mit einem Träger 1 bzw. einem Gehäuse ausgerüstet, an dem alle Systembestandteile des Räumgerätes I angeordnet sind. Unterhalb des Trägers 1 befindet sich das Fahrwerk 2 mit der Achse 21 des Fahrwerks. Im Ausführungsbeispiel ist das Fahrzeug mit Niederdruckreifen mit Pfeilverzahnung ausgeführt. Wie bereits erwähnt, ist es allerdings auch möglich, anstelle dessen ein Raupenfahrwerk vorzusehen. In Fahrt- bzw. Abtragrichtung a vorn an dem Gerät befindet sich die Abtragvorrichtung 3. Die Abtragvorrichtung 3 ist gebildet von einer Plattform 32. An dieser Plattform 32 sind 3 Umlenkrollen 33 angeordnet, über die ein flexibles Abtragmittel, z.B. ein Umlaufgurt 31 bzw. eine Umlaufkette 31 bewegbar läuft. Der Antrieb erfolgt maschinell durch die Antriebsvorrichtung 4 über nicht näher bezeichnete Antriebselemente bzw. Kraftübertragungselemente. Diese können üblicherweise als entsprechende Ritzel, Wellen bzw. als ein Getriebe ausgebildet sein. Die Erfindung ist hier nicht auf eine dieser Varianten eingeschränkt. An der Umlaufkette 31 sind umlaufend Schaber 34 als Abtragelemente angeordnet. Diese dienen dem Abtrag der abzutragen Sedimentschicht. In der Darstellung nach den Figuren läuft die Umlaufkette 31 nach links. Das abgetragene Material wird demzufolge auf der rechten Seite in Richtung auf das Fahrwerk zu bewegt und nach Umlauf über die Umlenkungsrolle 33 geführt, die nah am Fahrwerk 2 sich befindet, und dann abgeworfen. Dadurch entsteht in ausreichendem Abstand von dem Filterbecken 7 bzw. von der Begrenzungswand dieses Filterbeckens 7 ein Wall des abgeworfenen Materiales. Die Schaber 34 können, wie weiter oben erwähnt, ein- oder zweiteilig ausgeführt sein. Da dies zum Verständnis der Erfindung nicht unbedingt notwendig ist, wurde auf eine detaillierte Darstellung verzichtet. In Fahrt- bzw. Abtragrichtung a vor der Abtragvorrichtung 3 sind in der Darstellung nach den Figuren zwei Kufen 5 angeordnet. Diese besitzen jeweils einen abgewinkelten Taster 51. Dieser Taster 51 gleitet auf dem Boden 71 des Filterbeckens 7. Von dem jeweiligen Höhenniveau des Tasters 51 wird dann die Abtragtiefe für die abzutragen Sedimentschicht bestimmt. Wie bereits weiter vorn erwähnt, ist diese Einstellung jeweils an die Abtrag-Bedingungen anpassbar. An dem Träger 1 bzw. dem Gehäuse befindet sich die Abtragsvorrichtungs-Achse 8. Diese Abtragsvorrichtungs-Achse 8 ist höhenveränderbar ausgebildet. Über diese Abtragsvorrichtungs-Achse 8 lässt sich allerdings auch eine seitliche Winkelverstellung für die Abtragvorrichtung 3 vornehmen. Im Detail wurde dies weiter vorn bereits ausführlich beschrieben. Am hinteren Ende des Trägers 1 befindet sich eine Schub-bzw. Führungsvorrichtung 10, mittels derer die Vorrichtung entsprechend genau und vorsichtig in dem Filterbecken 7 bewegt werden kann. Die Abdeckung des Trägers 1 bzw. Gehäuses ist mit dem Bezugszeichen 11 bezeichnet.

Die Erfindung wurde zuvor anhand eines Ausführungsbeispiels beschrieben. Die Erfindung ist darauf jedoch nicht beschränkt. Die jetzt und mit der Anmeldung und später eingereichte Ansprüche sind Versuche zur Formulierung ohne Präjudiz für die Erzielung eines weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Räumgerät (I), zur Räumung und/oder Wartung von Filterbecken (7), bestehend aus wenigstens einem Träger (1), wenigstens einem Fahrwerk (2), wenigstens einer Abtragvorrichtung (3), wenigstens einer Antriebsvorrichtung (4) und wenigstens einer Schub- bzw. Führungsvorrichtung (10), wobei die Abtragvorrichtung (3) in Fahrt- bzw. Abtragrichtung (a) vorn bzw. vor dem Fahrwerk (2) bzw. vor einer Achse (21) des Fahrwerks (2) angeordnet ist, die Schub- bzw. Führungsvorrichtung (10) in Fahrt- bzw. Abtragrichtung (a) hinten vorgesehen ist und wobei die Abtragvorrichtung (3) eine Plattform (32) umfasst, auf der ein antreibbares bzw. angetriebenes Abtragmittel, wie z.B. eine antreibbare bzw. angetriebene, flexible Umlaufkette (31) bzw. ein flexibler Umlaufgurt (31) umläuft, um Material von einem Boden (71) des Filterbeckens (7) abzutragen, abzutransportieren und/oder abzuwerfen,
**dadurch gekennzeichnet,**
**dass** die Plattform (32) der Abtragvorrichtung (3) von einem Rahmen (35) gebildet ist, an dem wenigstens drei Umlenkrollen (33) eine Umlaufkette (31) bzw. einen Umlaufgurt (31) führen und an der Umlaufkette (31) bzw. dem Umlaufgurt (31) Abtragelemente bzw. Schaber (34) vorgesehen sind, die das Material abtragen und abtransportieren.

2. Räumgerät nach Anspruch 1, **dadurch gekennzeichnet, dass** das Räumgerät (I) als handgeführtes, motorisiertes Räumgerät ausgebildet ist und eine Arbeitsbreite von 40 cm bis zu 120 cm, vorzugsweise von 60 cm bis zu 80 cm aufweist.

3. Räumgerät nach Anspruch 1 oder 2, **dadurch gekennzeichnet, dass** eine der Umlenkrollen (33) verschwenkbar ausgebildet ist, vorzugsweise in einem Bereich bis zu 35 Grad, um die Abwurfbreite für das abgetragene Material zu verändern und um insbesondere dafür zur sorgen, dass der vom abgetragenen Material erzeugte Wall weiter auf die unbearbeitete Fläche geschoben wird bzw. zu verhindern, dass das Material nicht auf die bearbeitete Fläche zurückfällt.

4. Räumgerät nach einem der vorhergehenden Ansprüche, **dadurch gekennzeichnet, dass** die Abtragvorrichtung (3) sowohl um eine horizontale Achse quer zur Fahrt- bzw. Abtragrichtung (a) verschwenkbar, als auch parallel verschwenkbar und höhenverstellbar an dem Träger (1) angeordnet ist, um den Arbeitsbereich der Abtragvorrichtung zum Boden (71) hin anzupassen bzw. einzustellen.

5. Räumgerät nach einem der vorhergehenden Ansprüche, **dadurch gekennzeichnet, dass** an der Abtragvorrichtung (3) zumindest an der in Abtragrichtung (a) rechten Seite eine Seitenführung (6) vorgesehen ist, wobei die Seitenführung (6) vorzugsweise als Führungsrolle ausgebildet ist.

6. Räumgerät nach einem der vorhergehenden Ansprüche, **dadurch gekennzeichnet, dass** an der Abtragvorrichtung (3) in Arbeitsrichtung vorn vorzugsweise wenigstens eine als Kufe (5) ausgebildete Höhenverstell- bzw. Arbeitstiefeneinstellvorrichtung vorgesehen ist, um die Abtragtiefe einzustellen.

7. Räumgerät nach einem der vorhergehenden Ansprüche, **dadurch gekennzeichnet, dass** an den Schabern (34) Verschleißelemente angeordnet sind, deren zum Boden (71) weisende Seite eine Abschrägung von vorzugsweise 10 bis 15 Grad aufweisen.

8. Räumgerät nach einem der vorhergehenden Ansprüche, **dadurch gekennzeichnet, dass** die Verschleißelemente auswechselbar an den Schabern angeordnet sind.

9. Räumgerät nach einem der vorhergehenden Ansprüche, **dadurch gekennzeichnet, dass** als Antriebsvorrichtung (4) ein Verbrennungsmotor oder ein Elektromotor vorgesehen ist.

## Claims

1. Clearing device (I) for the clearing and/or maintenance of filter basins (7), consisting of at least one carrier (1), at least one chassis (2), at least one removal apparatus (3), at least one drive apparatus (4) and at least one pushing and/or guiding apparatus (10), wherein the removal apparatus (3) is arranged at the front and/or in front of the chassis (2) and/or in front of an axis (21) of the chassis (2) in the travel and/or removal direction (a), the pushing and/or guiding apparatus (10) is provided at the back in the travel and/or removal direction (a) and wherein the removal apparatus (3) comprises a platform (32) on which a drivable and/or driven removal means, such as a drivable and/or driven flexible circulating chain (31) and/or a flexible circulating belt (31), rotates in order to remove, transport away and/or discharge material from a bottom (71) of the filter basin (7),
**characterised in that**
the platform (32) of the removal apparatus (3) is formed by a frame (35) on which at least three deflection rollers (33) guide a circulating chain (31) and/or a circulating belt (31), and removal elements and/or scrapers (34) which remove and transport away the material are provided on said circulating chain (31) and/or circulating belt (31).

2. Clearing device according to claim 1, **characterised in that** the clearing device (I) is designed as a hand-held, motorised clearing device and has a working width from 40 cm up to 120 cm, preferably from 60 cm up to 80 cm.

3. Clearing device according to claim 1 or 2, **characterised in that** one of the deflection rollers (33) is designed to be pivotable, preferably in a range of up to 35°, in order to change the discharge width for the removed material and in particular to ensure that the wall produced by the removed material is pushed onward onto the unprocessed surface and/or to prevent the material to fall back onto the processed surface.

4. Clearing device according to any one of the preceding claims, **characterised in that** the removal apparatus (3) is arranged so as to be both pivotable about a horizontal axis transversely to the travel and/or removal direction (a) and also pivotable in parallel and height-adjustable on the carrier (1) in order to adjust and/or adapt the work region of the removal apparatus to the bottom (71).

5. Clearing device according to any one of the preceding claims, **characterised in that** on the removal apparatus (3) a side guide (6) is provided at least on the right-hand side in the removal direction (a), wherein the side guide (6) is preferably designed as a guiding roller.

6. Clearing device according to any one of the preceding claims, **characterised in that** preferably at least one height adjustment and/or work depth adjustment apparatus designed as a skid (5) is provided on the removal apparatus (3) at the front in the working direction, in order to adjust the removal depth.

7. Clearing device according to any one of the preceding claims, **characterised in that** wear elements are arranged on the scrapers (34), the side of said elements that faces the bottom (71) having a chamfer of preferably 10 to 15°.

8. Clearing device according to any one of the preceding claims, **characterised in that** the wear elements are arranged interchangeably on the scrapers.

9. Clearing device according to any one of the preceding claims, **characterised in that** the drive apparatus (4) is provided as an internal combustion engine or an electric motor.

## Revendications

1. Appareil de dragage (I), pour le dragage et/ou l'entretien de bassins filtrants (7), étant constitué d'au moins un support (1), d'au moins un châssis (2), d'au moins un dispositif d'enlèvement (3), d'au moins un dispositif d'entraînement (4) et d'au moins un dispositif de poussée et/ou de guidage (10), dans lequel le dispositif d'enlèvement (3) est disposé, dans le sens de conduite et/ou d'enlèvement (a), à l'avant et/ou devant le châssis (2) et/ou devant une axe (21) du châssis (2), le dispositif de poussée et/ou de guidage (10) étant situé à l'arrière dans le sens de conduite et/ou d'enlèvement (a) et le dispositif d'enlèvement (3) comporte une plate-forme (32) sur laquelle circule un moyen d'enlèvement entraîné et/ou pouvant être entraîné, tel qu'une chaîne de circulation flexible (31) entraînée et/ou pouvant être entraînée et/ou une courroie de circulation flexible (31), afin d'enlever, de transporter et/ou de décharger la matière à partir d'un fond (71) du bassin filtrant (7),
**caractérisé en ce**
**que** la plate-forme (32) du dispositif d'enlèvement (3) est formée par un châssis (35) sur lequel au moins trois rouleaux de renvoi (33) guident une chaîne de rotation (31) et/ou une courroie de rotation (31) et sur la chaîne de rotation (31) et/ou la courroie de rotation (31) sont prévus des éléments d'enlèvement et/ou racleurs (34) pour enlever et emporter la matière.

2. Appareil de dragage selon la revendication 1, **caractérisé en ce que** l'appareil de dragage (I) est conçu comme un appareil de dragage motorisé à main et présente une largeur de travail de 40 cm à 120 cm, de préférence de 60 cm à 80 cm.

3. Appareil de dragage selon la revendication 1 ou 2, **caractérisé en ce que** l'une des rouleaux de renvoi (33) est conçue pour pouvoir pivoter, de préférence dans une plage allant jusqu'à 35 degrés, pour modifier la largeur de décharge de la matière enlevée et en particulier pour garantir que la paroi produite par la matière enlevée soit ensuite poussée sur la surface non traitée et/ou pour éviter que la matière ne retombe sur la surface traitée.

4. Appareil de dragage selon l'une quelconque des revendications précédentes, **caractérisé en ce que** le dispositif d'enlèvement (3) est disposé à la fois autour d'un axe horizontal pouvant pivoter transversalement à la direction de conduite et/ou d'enlèvement (a), ainsi que pouvant pivoter parallèlement et de manière réglable en hauteur sur le support (1), afin d'adapter et/ou de régler la zone de travail du dispositif d'enlèvement par rapport au fond (71).

5. Appareil de dragage selon l'une quelconque des revendications précédentes, **caractérisé en ce que** sur le dispositif d'enlèvement (3), au moins sur le côté droit dans la direction d'enlèvement (a), est prévu un guide latéral (6), dans lequel le guide latéral (6) est de préférence conçu comme un rouleau de guidage.

6. Appareil de dragage selon l'une quelconque des revendications précédentes, **caractérisé en ce que** sur le dispositif d'enlèvement (3), à l'avant dans la direction de travail, de préférence au moins un dispositif de réglage de la profondeur de travail et/ou de réglage de la hauteur, conçu comme un patin (5), est prévu afin de régler la profondeur d'enlèvement.

7. Appareil de dragage selon l'une quelconque des revendications précédentes, **caractérisé en ce que** sur les racleurs (34) sont prévus des éléments d'usure, dont le côté tourné vers le fond (71) présente un chanfrein de préférence de 10 à 15 degrés.

8. Appareil de dragage selon l'une quelconque des revendications précédentes, **caractérisé en ce que** les éléments d'usure sont disposés de manière interchangeable sur les racleurs.

9. Appareil de dragage selon l'une quelconque des revendications précédentes, **caractérisé en ce que** le dispositif d'entraînement (4) est un moteur à combustion interne ou un moteur électrique.
